# FASCICULE DE BREVET EUROPEEN

(11) **EP 2 856 803 B1**
(45) Date de publication et mention de la délivrance du brevet: **26.10.2016**
(21) Numéro de dépôt: 13726743.1
(22) Date de dépôt: 29.05.2013
(51) Int. Cl.: H04W 40/24

(54) **PROCEDE DE SELECTION DE NOEUDS SERVANT DE RELAIS MULTIPOINTS**
VERFAHREN ZUR AUSWAHL VON KNOTEN ALS MEHRPUNKTRELAIS
METHOD FOR SELECTING NODES ACTING AS MULTIPOINT RELAYS

(30) Priorité: 29.05.2012 FR 1254941
(43) Date de publication de la demande: 08.04.2015
(73) Titulaire: Safran Electronics & Defense, 92100 Boulogne-Billancourt (FR)
(72) Inventeur: CHIODINI, Alain, 92100 Boulogne-Billancourt (FR)
(74) Mandataire: Regimbeau
(86) Numéro de dépôt international: PCT/EP2013/061025
(87) Numéro de publication internationale: WO 2013/178659

(56) Documents cités:
- KR-A- 20120 047 750
- US-A1- 2008 279 101
- DANG-QUAN NGUYEN ET AL: "Interference-Aware QoS OLSR for Mobile Ad-Hoc Network Routing", SOFTWARE ENGINEERING, ARTIFICIAL INTELLIGENCE, NETWORKING AND PARALLEL /DISTRIBUTED COMPUTING, 2005 AND FIRST ACIS INTERNATIONAL WORKSHOP ON SELF-ASSEMBLING WIRELESS NETWORKS. SNPD/SAWN 2005. SIXTH INTERNATIONAL CONFERENCE ON TOWSON, MD, USA 23-25 MA, 23 mai 2005 (2005-05-23), pages 428-435, XP010801635, DOI: 10.1109/SNPD-SAWN.2005.46 ISBN: 978-0-7695-2294-4

## Description

### DOMAINE DE L'INVENTION

Le domaine de l'invention est celui des systèmes de communication comportant des noeuds de communication formant un réseau maillé.

L'invention concerne plus précisément un réseau maillé mettant en oeuvre un protocole de routage selon lequel chaque noeud du réseau diffuse périodiquement un message de découverte de voisinage réseau, appelé message « Hello», à ces noeuds voisins afin de détecter les liens les inter-connectant, comme par exemple le protocole OLSR (« Optimized Link State Routing Protocol »).

### ARRIERE PLAN DE L'INVENTION

Des systèmes de communication formant un réseau maillé, en particulier un réseau maillé hiérarchique comme par exemple un réseau répondant à la norme DECT (« Digital European Cordless Telephone »), utilisent un mécanisme d'accès multiple par division temporelle TDMA (« Time Division Multiple Access »).

Pour augmenter la réactivité de systèmes de communication de type TDMA aux changements de condition de transmission, notamment par apparition d'un phénomène de brouillage ou d'évanouissement, il a été proposé par la Demanderesse, notamment dans la demande de brevet FR 1154262 déposée le 17 mai 2011, de réserver dans chaque trame TDMA une ressource de transmission partagée accessible par l'ensemble des noeuds.

Cette ressource commune permet à tout noeud de diffuser dans le système de communication des informations de synchronisation, de gestion de topologie, de détection de voisinage réseau et/ou de détection de changement de conditions de transmission.

Cette ressource commune est ainsi notamment utilisée par chaque noeud pour périodiquement diffuser à l'attention de ces noeuds voisins, typiquement les noeuds à un saut, un message de découverte de voisinage réseau, appelé message « Hello» dans le cadre du protocole OLSR, afin de détecter les liens les inter-connectant.

Le protocole OLSR présente l'originalité d'utiliser des noeuds spécifiques, dit relais multipoints (MPR : « MultiPoint Relay »), afin de minimiser l'inondation de paquets de diffusion d'informations de topologie (via des messages appelés TC pour « Topology Control ») dans le réseau, et ce en réduisant les retransmissions en double vers un même noeud.

Le protocole OLSR définit un algorithme suivant pour élire les noeuds MPR. Chaque noeud sélectionne ses relais multipoint parmi ses voisins situés à un saut. Les relais multipoint sont choisis de manière à couvrir (en termes de portée radio) tous les noeuds qui sont situés à deux noeuds de distance. L'ensemble de relais multipoints d'un noeud N, noté MPR (N), est un sous-ensemble du voisinage à 1 saut du noeud N qui satisfait la condition suivante : chaque noeud dont la distance est à deux sauts de N doit avoir un lien bidirectionnel vers les relais multipoints du noeud N.

On comprend que la performance du protocole OLSR est liée à l'optimisation du nombre de noeuds MPR élus (c'est-à-dire sa réduction au strict nécessaire), et qu'il faut pour ce faire éviter toute redondance inutile.

La demande coréenne KR20120047750 décrit aussi une méthode de sélection de relais multipoints suivant le préambule de la revendication 1.

### EXPOSÉ DE L'INVENTION

L'invention a pour objectif d'améliorer la performance d'un tel protocole OLSR, et plus particulièrement de proposer un algorithme plus efficace d'élection des noeuds MPR.

Elle propose à cet effet selon un premier aspect un procédé de communication dans un système comportant des noeuds de communication formant un réseau maillé dans lequel chaque noeud transmet périodiquement, via une ressource de transmission partagée accessible par l'ensemble des noeuds, un message de découverte de voisinage réseau à ces noeuds voisins afin de détecter les liens les inter-connectant, chaque noeud écoutant le medium servant de support à la ressource de transmission partagée pour déterminer si ledit medium est libre, des noeuds d'un sous-ensemble des noeuds du réseau maillé servant de relais exclusifs pour la propagation de messages de diffusion d'informations de topologie,

### caractérisé par les étapes consistant :

- pour chaque noeud, à :
   o détecter des collisions sur le medium lors de l'écoute ;
   o calculer une métrique à partir du nombre de collisions détectées ;
   o inscrire la métrique dans un premier champ du message de découverte de voisinage réseau que le noeud transmet ;
   o recevoir les messages de découverte de voisinage réseau provenant de ses noeuds voisins ;
   o comparer sa métrique aux métriques de ses noeuds voisins ;
- à ajouter un noeud audit sous-ensemble en fonction du résultat de la comparaison.

Certains aspects préférés, mais non limitatifs, de ce procédé sont les suivants :
- un noeud est ajouté au sous-ensemble si sa métrique est supérieure aux métriques de ses noeuds voisins ;
- la métrique calculée par un noeud est normalisée par un facteur qui est fonction du nombre des noeuds voisins dudit noeud.
- un noeud identifie le nombre de ses noeuds voisins en comptant le nombre de messages de découverte de voisinage réseau reçus, et la métrique calculée par un noeud correspond au ratio entre le nombre de collisions par unité de temps détectées par ledit noeud et le nombre de noeuds voisins dudit noeud.
- en fonction du résultat de la comparaison, un noeud s'auto-déclare ou est élu comme appartenant audit-sous ensemble ;
- le noeud auto-proclamé ou élu comme appartenant audit-sous ensemble renseigne un second champ du message de découverte de voisinage réseau que le noeud transmet.

L'invention porte également sur un système de communication dont les noeuds sont configurés pour mettre en oeuvre le procédé selon le premier aspect de l'invention. Elle vise également un message de découverte de voisinage réseau destiné à être transmis par un noeud, comportant un premier champ dans lequel est inscrite la métrique calculée par le noeud.

D'autres aspects, buts et avantages de la présente invention apparaîtront mieux à la lecture de la description détaillée suivante de formes de réalisation préférées de celle-ci, donnée à titre d'exemple non limitatif.

### DESCRIPTION DETAILLEE DE L'INVENTION

L'invention concerne un système de communication comportant des noeuds de communication formant un réseau maillé dans lequel chaque noeud transmet périodiquement un message de découverte de voisinage réseau (message « hello » dans le cadre du protocole OLSR) à ces noeuds voisins, typiquement les noeuds à un saut, afin de détecter les liens les inter-connectant. Par ailleurs, des noeuds d'un sous-ensemble des noeuds du réseau maillé (les noeuds MPR) servent de relais exclusifs pour la propagation de messages de diffusion d'informations de topologie (messages TC).

Prenant l'exemple d'un réseau DECT, les noeuds forment un réseau hiérarchique et communiquent par l'intermédiaire de trames de type à accès multiple par division temporelle (TDMA) et par division fréquentielle (FDMA : « Frequency Division Multiple Access »).

Comme indiqué précédemment, l'invention repose sur l'utilisation par chacun des noeuds du réseau d'une ressource de transmission partagée accessible par l'ensemble des noeuds afin de diffuser les messages « Hello » du protocole OLSR. Cette ressource de transmission partagée correspond à une ressource réservée dans chacune des trames.

La méthode d'accès permettant de gérer l'accès à cette ressource, dite CSMA/CD (« Carrier Sense Multiple Access with Collision Detection ») est la suivante. Le noeud écoute si le médium servant de support à la ressource de transmission partagée est libre. Si le médium est occupé, alors le noeud attend. Si le médium est libre, alors le noeud commence à transmettre. Si une collision survient au cours de la transmission, alors la transmission est arrêtée et le noeud attend un moment avant de recommencer à transmettre.

L'invention propose de sélectionner les noeuds MPR selon une heuristique physique plutôt que mathématique. Elle est plus principalement basée sur le principe que les noeuds les plus aptes à servir de MPR sont ceux qui sont témoins du plus grand nombre de collisions lorsqu'ils écoutent le médium servant de support à la ressource de transmission partagée. Les collisions de paquets surviennent naturellement en raison du problème du noeud caché et du défaut d'arbitrage lorsque les noeuds tentent de saisir le médium pour émettre leur message « hello » selon le mode d'accès simplifié présenté ci-dessus « on écoute avant de parler ».

Le procédé de sélection des noeuds MPR selon l'invention exploite un phénomène abhorré que l'on cherche généralement à minimiser afin d'optimiser le rendement du médium, à savoir la survenue de collisions intempestives lorsque les noeuds d'un réseau ad hoc tentent de saisir le médium. L'invention tire ainsi profit d'une imperfection inhérente à la méthode d'accès à la ressource.

Selon ce procédé de sélection, chaque noeud est configuré pour détecter des collisions sur le medium lors de l'écoute, et calculer une métrique à partir du nombre de collisions détectées.

La métrique calculée par un noeud est typiquement normalisée par un facteur qui est fonction du nombre des noeuds voisins dudit noeud. Dans ce cadre, un noeud peut identifier le nombre de ses noeuds voisins en comptant le nombre de messages « hello » de découverte de voisinage réseau reçus.

La métrique calculée par un noeud peut ainsi correspondre au nombre de collisions détectées par ledit noeud par unité de temps (soit ratio entre nombre de collisions détectées et durée d'écoute du médium).

Elle peut également correspondre au ratio entre nombre de collisions détectées par ledit noeud par unité de temps et le nombre de noeuds voisins, ou encore au ratio entre nombre de collisions détectées par ledit noeud par unité de temps et surface sur laquelle se déploie la partie du réseau constituée par les noeuds voisins.

La métrique peut par ailleurs être filtrée pour lisser sa valeur. Soit M(n) la métrique calculée à l'instant n et M_filtrée(n) la valeur filtrée correspondante, on peut par exemple retenir un filtrage s'exprimant: M_filtrée(n) = (1-lambda)* M_filtrée(n-1) + lambda*M(n). On peut également mettre en oeuvre un filtrage autorégressif à moyenne ajustée s'exprimant : M_filtrée(n)=A(M_filtrée(n-1), M_filtrée(n-2), ..., M_filtrée(n-NA+1)) + B(M (n), M(n*-1), ..., M(n-NB+1)), où A correspond à la partie autorégressive (NA coefficients) et B à la partie à moyenne ajustée (NB coefficients). D'autres types de filtrages peuvent bien entendu être envisagés (filtrage de Kalman par exemple).

La métrique ainsi calculée, et éventuellement filtrée, est inscrite dans un premier champ du message « hello » que le noeud transmet.

Lors de la réception des messages de découverte de voisinage réseau provenant de ses noeuds voisins, un noeud va prendre connaissance de la métrique de chacun de ses noeuds voisins et la comparer à sa propre métrique.

En fonction du résultat de cette comparaison, par exemple si la métrique d'un noeud s'avère supérieure aux métriques de ses noeuds voisins, on vient alors ajouter ledit noeud à la liste des noeuds MPR. D'une manière générale, le résultat de cette comparaison est confronté à un seuil fixe (prédéterminé) ou mobile (ajusté en fonction de l'évolution d'un paramètre comme le nombre de noeuds voisins par exemple). Une comparaison à deux seuils (hystérésis) peut également être utilisée, les seuils de comparaisons dépendant de la croissance ou de la décroissance de la métrique.

En particulier, le noeud peut s'autoproclamer noeud MPR et mettre à jour un second champ de son message « hello » constitué d'un bit indiquant si le noeud émettant le message est noeud MPR ou non. Ainsi, les noeuds voisins sauront qu'il est devenu MPR lors de la réception du prochain message « hello » que le noeud auto-proclamé MPR enverra.

En variante, le noeud peut être élu MPR (comme cela est le cas dans le cadre du protocole OLSR). Un noeud donné viendrait alors typiquement élire MPR celui d'entre ses noeuds voisins ayant la meilleure métrique. Ici aussi, un second champ du message « hello » permettrait d'aviser les noeuds voisins de ce qu'un noeud a été élu MPR.

Le procédé de sélection des noeuds MPR selon l'invention présente l'avantage d'une grande simplicité de mise en oeuvre puisque les noeuds se contentent globalement d'écouter le médium pour déterminer leur statut. Les messages « hello » sont en outre simplement modifiés pour comprendre deux champs supplémentaires, l'un contenant la métrique calculée, l'autre étant constitué d'un bit indiquant si le noeud est MPR ou non.

L'invention n'est par ailleurs par limitée à un procédé de sélection de noeuds MPR, mais s'étend également au système de communication dans son ensemble, à un noeud configuré pour mettre en oeuvre ce procédé, ainsi qu'à un message de type « hello » comportant un champ contenant la métrique calculé par un tel noeud.

## Revendications

1. Procédé de communication dans un système comportant des noeuds de communication formant un réseau maillé dans lequel chaque noeud transmet périodiquement, via une ressource de transmission partagée accessible par l'ensemble des noeuds, un message de découverte de voisinage réseau à ces noeuds voisins afin de détecter les liens les inter-connectant, chaque noeud écoutant le medium servant de support à la ressource de transmission partagée pour déterminer si ledit medium est libre, des noeuds d'un sous-ensemble des noeuds du réseau maillé servant de relais exclusifs pour la propagation de messages de diffusion d'informations de topologie, **caractérisé par** les étapes consistant :
- pour chaque noeud, à :
o détecter des collisions sur le medium lors de l'écoute ;
o calculer une métrique à partir du nombre de collisions détectées ;
o inscrire la métrique dans un premier champ du message de découverte de voisinage réseau que le noeud transmet ;
o recevoir les messages de découverte de voisinage réseau provenant de ses noeuds voisins ;
o comparer sa métrique aux métriques de ses noeuds voisins ;
- à ajouter un noeud audit sous-ensemble en fonction du résultat de la comparaison.

2. Procédé selon la revendication 1, dans lequel un noeud est ajouté au sous-ensemble si sa métrique est supérieure aux métriques de ses noeuds voisins.

3. Procédé selon l'une des revendications 1 ou 2, dans lequel la métrique calculée par un noeud est normalisée par un facteur qui est fonction du nombre des noeuds voisins dudit noeud.

4. Procédé selon la revendication 3, dans lequel un noeud identifie le nombre de ses noeuds voisins en comptant le nombre de messages de découverte de voisinage réseau reçus.

5. Procédé selon l'une des revendications 3 à 4, dans lequel la métrique calculée par un noeud correspond au ratio entre le nombre de collisions par unité de temps détectées par ledit noeud et le nombre de noeuds voisins dudit noeud.

6. Procédé selon la revendication 1, dans lequel en fonction du résultat de la comparaison, un noeud s'auto-déclare ou est élu comme appartenant audit-sous ensemble.

7. Procédé selon la revendication 6, dans lequel le noeud auto-proclamé ou élu comme appartenant audit-sous ensemble renseigne un second champ du message de découverte de voisinage réseau que le noeud transmet.

8. Système de communication comportant des noeuds de communication formant un réseau maillé dans lequel chaque noeud transmet périodiquement, via une ressource de transmission partagée accessible par l'ensemble des noeuds, un message de découverte de voisinage réseau à ces noeuds voisins afin de détecter les liens les inter-connectant, chaque noeud écoutant le medium servant de support à la ressource de transmission partagée pour déterminer si ledit medium est libre, des noeuds d'un sous-ensemble des noeuds du réseau maillé servant de relais exclusifs pour la propagation de messages de diffusion d'informations de topologie, système **caractérisé en ce que** chaque noeud est configuré pour :
o détecter des collisions sur le medium lors de l'écoute ;
o calculer une métrique à partir du nombre de collisions détectées ;
o inscrire la métrique dans un premier champ du message de découverte de voisinage réseau que le noeud transmet ;
o recevoir les messages de découverte de voisinage réseau provenant de ses noeuds voisins ;
o comparer sa métrique aux métriques de ses noeuds voisins ;
- et dans lequel un noeud est ajouté audit sous-ensemble en fonction du résultat de la comparaison.

9. Système selon la revendication précédente dans lequel les noeuds forment un réseau radio hiérarchique.

10. Système selon la revendication précédente, dans lequel les noeuds communiquent par l'intermédiaire de trames de type à accès multiple par division temporelle et par division fréquentielle, et dans lequel la ressource de transmission partagée accessible par l'ensemble des noeuds est une ressource réservée dans chacune des trames.

11. Noeud d'un système de communication comportant des noeuds de communication formant un réseau maillé dans lequel chaque noeud transmet périodiquement, via une ressource de transmission partagée accessible par l'ensemble des noeuds, un message de découverte de voisinage réseau à ces noeuds voisins afin de détecter les liens les inter-connectant, chaque noeud écoutant le medium servant de support à la ressource de transmission partagée pour déterminer si ledit medium est libre, des noeuds d'un sous-ensemble des noeuds du réseau maillé servant de relais exclusifs pour la propagation de messages de diffusion d'informations de topologie, **caractérisé en ce qu'**il est configuré pour :
o détecter des collisions sur le medium lors de l'écoute ;
o calculer une métrique à partir du nombre de collisions détectées ;
o inscrire la métrique dans un premier champ du message de découverte de voisinage réseau que le noeud transmet ;
o recevoir les messages de découverte de voisinage réseau provenant de ses noeuds voisins ;
o comparer sa métrique aux métriques de ses noeuds voisins.

## Patentansprüche

1. Kommunikationsverfahren in einem System, das Kommunikationsknoten aufweist, die ein Maschennetz bilden, in welchem jeder Knoten über eine gemeinsame Übertragungsressource, die von allen Knoten erreichbar ist, an diese Nachbarknoten eine Netznachbarschaftsentdeckungsnachricht periodisch überträgt, um die Verbindungen zu ermitteln, die sie miteinander verbinden, wobei jeder Knoten das Medium abhört, das der gemeinsamen Übertragungsressource als Träger dient, um zu bestimmen, ob das Medium frei ist, wobei Knoten einer Untergruppe der Knoten des Maschennetzes als exklusive Relais für die Weitergabe von Verbreitungsnachrichten von Topologieinformationen dienen,
**gekennzeichnet durch** Schritte, die bestehen aus:
- für jeden Knoten, dem:
o Ermitteln der Kollisionen auf dem Medium beim Abhören,
o Berechnen einer Metrik auf der Basis der Anzahl ermittelter Kollisionen,
o Eintragen der Metrik in ein erstes Feld der Netznachbarschaftsentdeckungsnachricht, die der Knoten überträgt,
o Empfangen der Netznachbarschaftsentdeckungsnachrichten, die von seinen benachbarten Knoten kommen,
o Vergleichen seiner Metrik mit den Metriken seiner Nachbarknoten,
- dem Hinzufügen eines Knotens zu der Untergruppe in Abhängigkeit vom Ergebnis des Vergleichs.

2. Verfahren nach Anspruch 1, wobei ein Knoten der Untergruppe hinzugefügt wird, wenn seine Metrik größer als die Metriken seiner Nachbarknoten ist.

3. Verfahren nach einem der Ansprüche 1 oder 2, wobei die von einem Knoten berechnete Metrik mittels eines Faktors eingestellt wird, der von der Anzahl der Nachbarknoten des Knotens abhängt.

4. Verfahren nach Anspruch 3, wobei ein Knoten die Anzahl seiner Nachbarknoten durch Zählen der Anzahl der empfangenen Netznachbarschaftsentdeckungsnachrichten ermittelt.

5. Verfahren nach einem der Ansprüche 3 bis 4, wobei die von einem Knoten berechnet Metrik dem Verhältnis zwischen der Anzahl der von dem Knoten je Zeiteinheit ermittelten Kollisionen und der Anzahl der Nachbarknoten des Knotens entspricht.

6. Verfahren nach Anspruch 1, wobei sich ein Knoten in Abhängigkeit des Ergebnisses des Vergleichs selbst meldet oder als der Untergruppe zugehörig gewählt wird.

7. Verfahren nach Anspruch 6, wobei der Selbstmeldungs- oder als der Untergruppe zugehörige gewählte Knoten ein zweites Feld der Netznachbarschaftsentdeckungsnachricht, die der Knoten übermittelt, mitteilt.

8. Kommunikationssystem, aufweisend Kommunikationsknoten, die ein Maschennetz bilden, in welchem jeder Knoten über eine gemeinsame Übertragungsressource, die von allen Knoten erreichbar ist, an diese Nachbarknoten eine Netznachbarschaftsentdeckungsnachricht periodisch überträgt, um die Verbindungen zu ermitteln, die sie miteinander verbinden, wobei jeder Knoten das Medium abhört, das der gemeinsamen Übertragungsressource als Träger dient, um zu bestimmen, ob das Medium frei ist, wobei Knoten einer Untergruppe der Knoten des Maschennetzes als exklusive Relais für die Weitergabe von Verbreitungsnachrichten von Topologieinformationen dienen,
wobei das System **dadurch gekennzeichnet ist, dass** jeder Knoten konfiguriert ist, um:
o Kollisionen auf dem Medium beim Abhören zu ermitteln,
o eine Metrik auf der Basis der Anzahl ermittelter Kollisionen zu ermitteln,
o die Metrik in ein erstes Feld der Netznachbarschaftsentdeckungsnachricht, die der Knoten überträgt, einzutragen,
o die Netznachbarschaftsentdeckungsnachrichten, die von seinen benachbarten Knoten kommen, zu empfangen,
o seine Metrik mit den Metriken seiner Nachbarknoten zu vergleichen,
- und wobei ein Knoten der Untergruppe in Abhängigkeit vom Ergebnis des Vergleichs hinzugefügt wird.

9. System nach vorangehendem Anspruch, wobei die Knoten ein hierarchisches Funknetz bilden.

10. System nach vorangehendem Anspruch, wobei die Knoten über Raster vom Typ mit Zeit- und Frequenzmultiplexzugriff kommunizieren, und wobei die von allen Knoten erreichbare gemeinsame Übertragungsressource eine in jedem der Raster reservierte Ressource ist.

11. Knoten eines Kommunikationssystems, aufweisend Kommunikationsknoten, die ein Maschennetz bilden, in welchem jeder Knoten über eine gemeinsame Übertragungsressource, die von allen Knoten erreichbar ist, an diese Nachbarknoten eine Netznachbarschaftsentdeckungsnachricht periodisch überträgt, um die Verbindungen zu ermitteln, die sie miteinander verbinden, wobei jeder Knoten das Medium abhört, das der gemeinsamen Übertragungsressource als Träger dient, um zu bestimmen, ob das Medium frei ist, wobei Knoten einer Untergruppe der Knoten des Maschennetzes als exklusive Relais für die Weitergabe von Verbreitungsnachrichten von Topologieinformationen dienen,
**dadurch gekennzeichnet, dass** er konfiguriert ist, um:
o Kollisionen auf dem Medium beim Abhören zu ermitteln,
o eine Metrik auf der Basis der Anzahl ermittelter Kollisionen zu ermitteln,
o die Metrik in ein erstes Feld der Netznachbarschaftsentdeckungsnachricht, die der Knoten überträgt, einzutragen,
o die Netznachbarschaftsentdeckungsnachrichten, die von seinen benachbarten Knoten kommen, zu empfangen,
o seine Metrik mit den Metriken seiner Nachbarknoten zu vergleichen.

## Claims

1. A communication method in a system including communication nodes forming a mesh network in which each node periodically transmits, via a shared transmission resource accessible to the whole of the nodes, a network neighborhood discovery message to these neighboring nodes in order to detect the links connecting them with each other, each node listening to the medium used as a support for the shared transmission resource in order to determine whether said medium is free, nodes of a subset of the nodes of the mesh network being used as exclusive relays for propagating topology information broadcasting messages,
**characterized by** the steps consisting of:
- for each node:
o detecting collisions on the medium upon listening;
o computing a metric from the number of detected collisions;
o writing the metric into a first field of the network neighborhood discovery message which the node transmits;
o receiving the network neighborhood discovery messages from its neighboring nodes;
o comparing its metric to the metrics of its neighboring nodes;
- adding a node to said subset depending on the result of the comparison.

2. The method according to claim 1, wherein a node is added to the subset if its metric is greater than the metrics of its neighboring nodes.

3. The method according to one of claims 1 or 2, wherein the metric computed by a node is normalized with a factor which depends on the number of the neighboring nodes of said node.

4. The method according to claim 3, wherein a node identifies the number of its neighboring nodes by counting the number of received network neighborhood discovery messages.

5. The method according to one of claims 3 to 4, wherein the metric computed by a node corresponds to the ratio between the number of collisions per unit time detected by said node and the number of neighboring nodes of said node.

6. The method according to claim 1, wherein depending on the result of the comparison, a node declares itself or is elected as belonging to said subset.

7. The method according to claim 6, wherein the self-declared or elected node as belonging to said subset gives information to a second field of the network neighborhood discovery message which the node transmits.

8. A communication system including communication nodes forming a mesh network in which each node periodically transmits, via a shared transmission resource accessible by the whole of the nodes, a network neighborhood discovery message to these neighboring nodes in order to detect the links connecting them with each other, each node listening to the medium used as a support for the shared transmission resource, in order to determine whether said medium is free, nodes of a subset of the nodes of the mesh network being used as exclusive relays for propagating topology information broadcasting messages,
a system **characterized in that** each node is configured for:
o detecting collisions on the medium upon listening;
o computing a metric from the number of detected collisions;
o writing the metric into a first field of the network neighborhood discovery message which the node transmits;
o receiving the network neighborhood discovery messages from its neighboring nodes;
o comparing its metric with the metrics of its neighboring nodes;
- and wherein a node is added to said subset depending on the result of the comparison.

9. The system according to the preceding claim, wherein the nodes form a hierarchical radio network.

10. The system according to the preceding claim, wherein the nodes communicate via frames of the time division multiple access type and by frequency division, and wherein the shared transmission resource accessible by the whole of the nodes is a reserved resource in each of the frames.

11. A node of a communication system including communication nodes forming a mesh network in which each node periodically transmits, via a shared transmission resource accessible to the whole of the nodes, a network neighborhood discovery message to these neighboring nodes in order to detect the links connecting them with each other, each node listening to the medium used as a support for the shared transmission resource in order to determine whether said medium is free, nodes of a subset of the nodes of the mesh network being used as exclusive relays for propagating topology information broadcasting messages,
characterizing that it is configured for:
o detecting collisions on the medium upon listening;
o computing a metric from the number of detected collisions;
o writing the metric into a first field of the network neighborhood discovery message which the node transmits;
o receiving the network neighborhood discovery messages from its neighboring nodes;
o comparing its metric to the metrics of its neighboring nodes.
